# EUROPÄISCHE PATENTANMELDUNG

(11) **EP 0 665 066 A1**
(43) Veröffentlichungstag der Anmeldung: **02.08.1995**
(21) Anmeldenummer: 95100225.2
(22) Anmeldetag: 10.01.1995
(51) Int. Cl.: B09C 1/02, E21B 43/40

(54) **Vorrichtung zur Beeinflussung von im Erdreich befindlicher Flüssigkeit**

(30) Priorität: 21.01.1994 DE 4401677
(71) Anmelder: IEG Industrie-Engineering GmbH, D-72770 Reutlingen (DE)
(72) Erfinder: Bernhardt, Bruno, D-72764 Reutlingen (DE)
(74) Vertreter: Möbus, Rudolf, Dipl.-Ing.

(57) **Zusammenfassung**

Eine Vorrichtung zur Beeinflussung von im Erdreich (16) befindlicher Flüssigkeit mittels eines in das Erdreich (16) eingebrachten Brunnenschachts (10), der durch mindestens eine Trennwandung (12) in mehrere, gegeneinander abgedichtete Schachtbereiche (10.1, 10.2) zur Erzeugung mindestens eines Flüssigkeitskreislaufs zwischen dem Brunnenschacht (10) und dem ihn umgebenden Erdreich (16) aufgeteilt ist, wobei die Wiedereinleitung der Flüssigkeit vom Brunnenschacht (10) in das umgebende Erdreich (16) über mindestens einen unter Unterdruck stehenden, mit Durchgangsöffnungen (18) versehenen Verteilerkanal (17) erfolgt.

## Beschreibung

Die Erfindung betrifft eine Vorrichtung zur Beeinflussung von im Erdreich befindlicher Flüssigkeit mittels eines in das Erdreich eingebrachten Brunnenschachts mit teilweise flüssigkeitsdurchlässiger Wandung, der durch mindestens eine Trennwandung in mehrere, gegeneinander abgedichtete Schachtbereiche zur Erzeugung mindestens eines Flüssigkeitskreislaufs zwischen dem Brunnenschacht und dem ihm umgebenden Erdreich aufgeteilt ist.

Gattungsgemäße Vorrichtungen sind insbesondere zur Grundwasserreinigung bereits bekannt. Bei den bekannten Vorrichtungen sind hierzu Pump- oder Saugvorrichtungen in einem mit einem Brunnenrohr ausgekleideten Schacht vorgesehen, die in einem der Schachtbereiche Flüssigkeit in den Schacht einsaugen und anschließend in einen zweiten Schachtbereich wieder an das Erdreich abgeben, so daß insgesamt ein Flüssigkeitskreislauf zwischen Schacht und Erdreich entsteht. Die Wiedereinleitung der Flüssigkeit in das umgebende Erdreich erfolgt dabei über Durchgangsöffnungen in der Schachtwandung, d. h. die Flüssigkeit wird in unmittelbarer Umgebung des Schachtes wieder an das Erdreich abgegeben. Das hat den Nachteil, daß die radiale Reichweite der im Erdreich erzeugten Flüssigkeitskreisläufe begrenzt ist.

Der Erfindung liegt die Aufgabe zugrunde, eine Vorrichtung der eingangs genannten Art so auszubilden, daß eine Erzeugung von Flüssigkeitskreisläufen mit großer radialer Reichweite sowie eine äußerst gleichmäßige Verteilung der wiedereingeleiteten Flüssigkeit im umgebenden Erdreich ermöglicht wird.

Die Aufgabe wird mit einer gattungsgemäßen Vorrichtung erfindungsgemäß dadurch gelöst, daß die Wiedereinleitung der Flüssigkeit vom Brunnenschacht in das umgebende Erdreich über mindestens einen unter Unterdruck stehenden, mit Durchgangsöffnungen versehenen und sich in das umgebende Erdreich erstreckenden Verteilerkanal erfolgt.

Der sich in das Erdreich erstreckende mindestens eine Verteilerkanal, der zweckmäßigerweise als Rohr mit einem sich horizontal erstreckenden gelochten Abschnitt ausgebildet sein kann, erlaubt eine Wiedereinleitung der Flüssigkeit in relativ großer radialer Entfernung vom Brunnenschacht, d. h. die Reichweite der mit der Vorrichtung erzeugten Flüssigkeitskreisläufe ist sehr viel größer als bei den bislang bekannten Vorrichtungen. Der im Verteilerkanal herrschende Unterdruck sorgt hierbei dafür, daß die Flüssigkeit durch sämtliche öffnungen des Verteilerkanals gleichmäßig austritt, d. h. daß keine Konzentration der Flüssigkeitsabgabe auf die dem Brunnenschacht unmittelbar benachbarten öffnungen des Verteilerkanals auftritt. Eine besonders hohe Gleichmäßigkeit der Flüssigkeitsverteilung im umgebenden Erdreich läßt sich durch eine sternförmige Anordnung einer Vielzahl von Verteilerkanälen erzielen. Der mindestens eine Verteilerkanal kann sich auch oberhalb des Flüssigkeitsspiegels in das umgebende Erdreich erstrecken. Dies hat den Vorteil, daß auch oberhalb des Flüssigkeitsspiegels liegende Schichten des Erdreichs beeinflußt werden können. Die erfindungsgemäße Vorrichtung kann dann auch in der Landwirtschaft oder in Gärtnereien zur Bodenbewässerung oder zur Verteilung von Nährstoffen im Boden eingesetzt werden. Dabei kann auch das Ansaugen des Grundwassers in den Brunnenschacht in einem Bereich unmittelbar oberhalb des Flüssigkeitsspiegels im Erdreich erfolgen, wodurch verhindert werden kann, daß in den Boden eingebrachte Nährstoffe in das Grundwasser gelangen und dieses in unzulässiger Weise chemisch verändern. Für den Einsatz in Gärtnereien oder in der Landwirtschaft kann im Brunnenschacht vorteilhafterweise eine Pumpe, deren Leistung in Abhängigkeit von der Bodenfeuchtigkeit steuerbar ist, angeordnet sein. Damit ist eine automatische Konstanthaltung des Feuchtigkeitsgehaltes des Bodens erzielbar. Der mindestens eine Verteilerkanal kann auch an beiden Enden mit dem Schacht verbunden sein, und es kann im Schacht oberhalb des Flüssigkeitsspiegels ein Unterdruck herrschen. Auf diese Weise kann der im Schacht herrschende Unterdruck auch zu Behandlungszwecken der Flüssigkeit genutzt werden. So kann beispielsweise im oberen Bereich des Schachtes ein topfartiger Behandlungseinsatz mit einer Düsenplatte im Bodenbereich und einem bis unterhalb der Düsenplatte geführten Gaszufuhrkanal, der durch den im Schacht herrschenden Unterdruck Gas von außen bis unter die Düsenplatte leitet, und mit mehreren, oberhalb der Düsenplatte angeordneten konzentrischen Leitringen zur Führung der aus einem unteren Schachtbereich angesaugten und über ein Durchgangsrohr in den oberen Schachtbereich in den topfartigen Einsatz geleiteten Flüssigkeit angeordnet sein. Mit dieser Anordnung ist eine Belüftung oder Begasung der Flüssigkeit in mehreren, durch die Töpfe und Leitringe gebildeten Behandlungsräumen möglich. Die Leitringe können dabei teilweise auf der Düsenplatte aufsitzen, wodurch eine Ausbildung von mehrmals durchlaufenen Flüssigkeitswirbeln zwischen den einzelnen Leitringen vermieden wird. Die Flüssigkeit durchfließt vielmehr sämtliche Behandlungsräume gleichmäßig. Es kann auch eine Zuführöffnung zur Einleitung von Behandlungsstoffen in den oberen Schachtbereich vorgesehen sein. Diese Behandlungsstoffe werden im Behandlungseinsatz gut mit der Flüssigkeit durchmischt und anschließend über den mindestens einen Verteilerkanal gleichmäßig im Erdreich verteilt. Der Behandlungseinsatz, das Durchgangsrohr und der mindestens eine Verteilerkanal können vorteilhafterweise eine nachträglich in den oberen Bereich eines Brunnensehachtes einsetzbare Baueinheit bilden, wodurch bereits bestehende Brunnenschächte auf einfache Weise mit einer erfindungsgemäßen Vorrichtung nachgerüstet werden können.

Nachfolgend werden zwei bevorzugte Ausführungsbeispiele einer erfindungsgemäßen Vorrichtung anhand der Zeichnung näher erläutert.

Im einzelnen zeigen:
- Fig. 1: einen zentralen Längsschnitt durch eine erste Ausführungsform der Vorrichtung;
- Fig. 2: einen zentralen Längsschnitt durch eine zweite Ausführungsform der Vorrichtung.

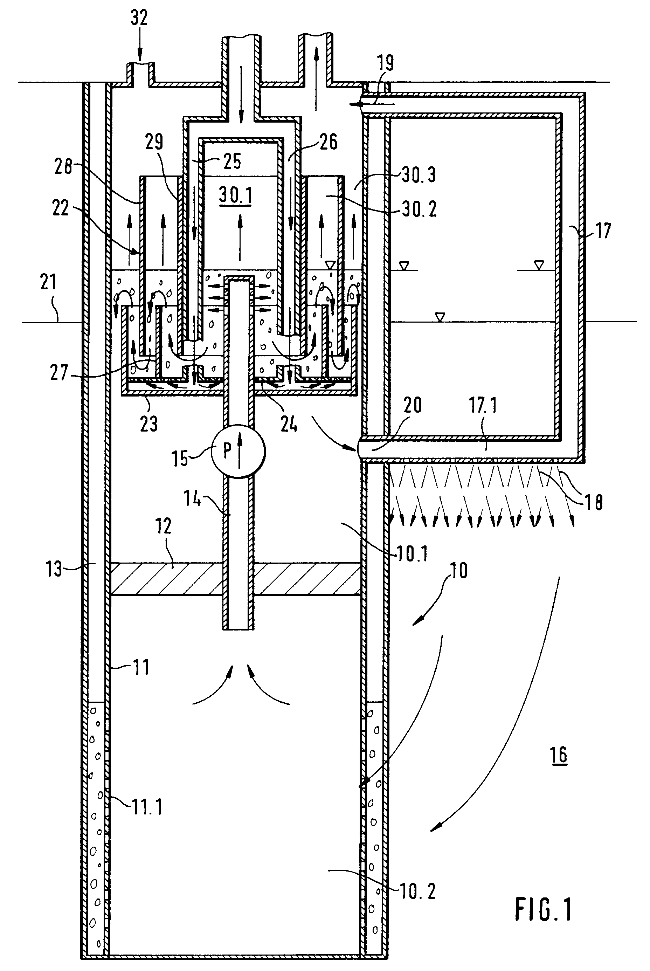

Fig. 1 zeigt einen Brunnenschacht 10, der mit einem Brunnenrohr 11 ausgekleidet ist. Der Schacht 10 ist durch eine in das Brunnenrohr 11 eingesetzte Trennwandung 12 in einen oberen Bereich 10.1 und einen unteren Bereich 10.2 aufgeteilt. Beide Schachtbereiche 10.1 und 10.2 sind intern durch die Trennwandung 12 und extern durch eine das Brunnenrohr 11 umgebende Dichtung 13 gegeneinander abgedichtet. Im unteren Schachtbereich 10.2 weist das Brunnenrohr 11 einen Bereich 11.1 mit flüssigkeitsdurchlässiger Wandung auf. Durch die Trennwandung 12 ist ein Durchgangsrohr 14, in dem eine Pumpe 15 angeordnet ist, geführt. Mit Hilfe der Pumpe 15 wird Flüssigkeit aus dem den Brunnenschacht 10 umgebenden Erdreich 16 in den unteren Schachtbereich 10.2 und von dort durch das Durchgangsrohr 14 in den oberen Schachtbereich 10.1 gefördert. Am oberen Bereich 10.1 des Schachtes ist ein Verteilerkanal 17 angeordnet, der als Rohr mit einem horizontal sich in das Erdreich 16 erstreckenden Abschnitt 17.1 mit Durchgangsöffnungen 18 ausgebildet ist. Der Verteilerkanal 17 mündet mit seinen beiden Enden 19 und 20 in den oberen Schachtbereich 10.1. Das obere Ende 19 des Verteilerkanals 17 mündet dabei oberhalb des Flüssigkeitsspiegels 21 in den Schacht. In diesem Schachtbereich herrscht ein Unterdruck, der sowohl im Schacht 10 als auch im Verteilerkanal 17 zu einer Anhebung des Flüssigkeitsspiegels 21 führt. Im Verteilerkanal hat der Unterdruck außerdem die Wirkung, daß der Flüssigkeitsaustritt durch sämtliche öffnungen 18 des Verteilerkanals 17 gleichmäßig erfolgt. Dadurch erfolgt eine äußerst gleichmäßige Verteilung der abgegebenen Flüssigkeit in radialer Richtung im Erdreich 16. Der zwischen dem Verteilerkanal 17 und dem unteren Schachtbereich 10.2 ausgebildete Flüssigkeitskreislauf erhält außerdem durch den sich in horizontaler Richtung erstreckenden Teil 17.1 des Verteilerkanals 17 eine große radiale Reichweite. Im in Fig. 1 dargestellten Beispiel gelangt die Flüssigkeit vor der Wiedereinleitung in das umgebende Erdreich zunächst in eine Behandlungseinrichtung 22, die von einem topfartigen Einsatz 23 gebildet wird, der in seinem Bodenbereich eine Düsenplatte 24 aufweist. Unter die Düsenplatte 24 ist ein aus zwei Rohren 25 und 26 gebildeter Gaszufuhrkanal geführt, der Luft oder Gase von außerhalb des Schachtes 10 durch den oberhalb des Flüssigkeitsspiegels 21 im Schacht 10 herrschenden Unterdruck bis unterhalb die Düsenplatte saugt. Von dort steigt das Gas durch die öffnungen der Düsenplatte 24 in Form von Bläschen in der oberhalb der Düsenplatte befindlichen Flüssigkeit auf. Der Raum oberhalb der Düsenplatte 24 ist durch einen auf der Düsenplatte 24 aufsitzenden Leitring 27 sowie zwei weiteren, konzentrisch zum ersten und beabstandet von der Düsenplatte 24 angeordneten Leitringen 28 und 29 in mehrere Behandlungsräume 30.1 bis 30.3 aufgeteilt, die von der Flüssigkeit entlang den Pfeillinien 31 nacheinander durchlaufen werden, bevor die Flüssigkeit durch die Wirkung des Unterdruckes in den Verteilerkanal 17 und von dort in das umgebende Erdreich 16 zurückgelangt. Im oberen Schachtbereich 10.1 ist außerdem eine Zuführöffnung 32 zur Eingabe von Nährstoffen, Reinigungssubstanzen oder dergleichen vorgesehen. In der Behandlungseinrichtung 22 findet eine gleichmäßige Vermischung der Flüssigkeit mit diesen Zusatzstoffen statt. Anschließend sorgt der Verteilerkanal 17 für eine gleichmäßige Verteilung der Zusätze im umgebenden Erdreich 16. Im in Fig. 1 dargestellten Beispiel wird die Flüssigkeit dem Erdreich unterhalb des Flüssigkeitsspiegels 21 wieder zugeleitet. Es ist jedoch genauso möglich, die Wiedereinleitung des Wassers oberhalb des Flüssigkeitsspiegels 21 im Erdreich vorzunehmen, wodurch die Einrichtung für Bewässerungszwecke oder dergleichen in der Landwirtschaft und in Gärtnereien genutzt werden kann. Auch ein Wiederansaugen der Flüssigkeit oberhalb des Flüssigkeitsspiegels 21 in einem Sättigungsbereich im Erdreich 16 ist möglich. Auf diese Weise kann verhindert werden, daß etwa zugefügte Nährstoffe oder dergleichen unerwünschterweise ins Grundwasser gelangen.

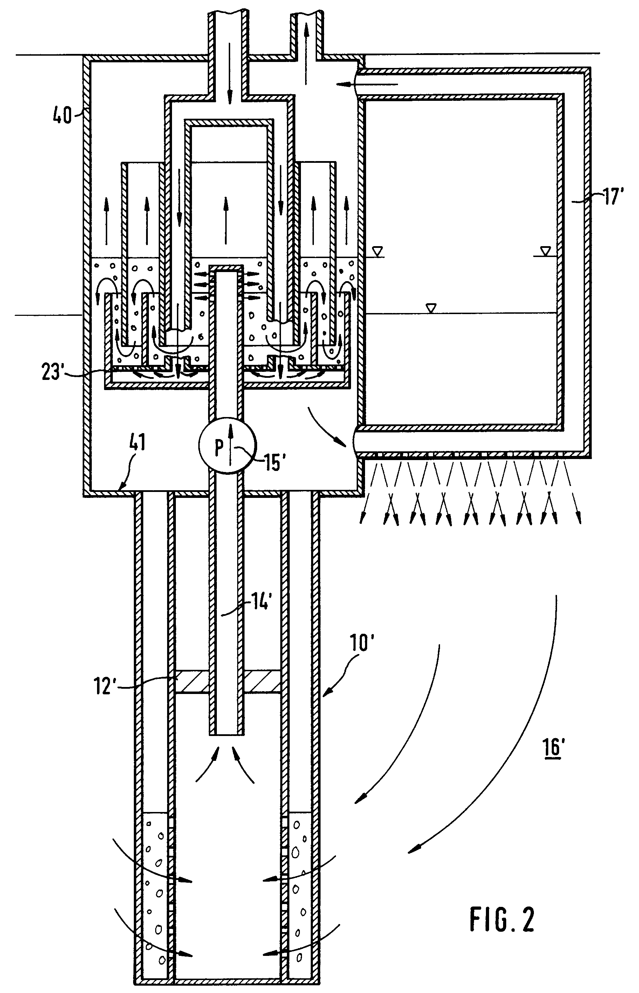

Das in Fig. 2 dargestellte zweite Ausführungsbeispiel entspricht in wesentlichen Teilen dem Ausführungsbeispiel nach Fig. 1. Der einzige Unterschied besteht darin, daß der Behandlungseinsatz 23', das Durchgangsrohr 14' sowie der Verteilerkanal 17' als eine Baueinheit ausgeführt sind. Der Behandlungseinsatz 23' ist hierzu in einem zylindrischen Behälter 40 angeordnet, von dem der Verteilerkanal 17' abgezweigt ist. Das Durchgangsrohr 14' ist durch den Boden 41 des Behälters 40 geführt und ragt über diesen hervor. Der Behälter 40 läßt sich auf einen bereits bestehenden Brunnenschacht 10' einfach aufsetzen. Das Durchgangsrohr 14' wird dabei mit seinem über dem Boden 41 des Behälters 40 hervorstehenden Teil durch eine Trennwandung 12' des Schachtes 10' geführt und kann dadurch Flüssigkeit aus einem unteren Schachtbereich 10.2' ansaugen.

In den in den Fig. 1 und 2 gezeigten Ausführungsbeispielen sind jeweils nur ein Verteilerkanal 17 bzw. 17' vorgesehen. Eine wesentlich bessere radiale Verteilung wird durch eine sternförmige Anordnung einer Vielzahl von Verteilerkanälen 17, 17' erzielt. Die Form der Verteilerkanäle ist dabei beliebig. Es ist auch nicht zwingend notwendig, daß sie mit ihrem oberen Ende 19 ebenfalls wieder im Brunnenschacht münden. Ein Unterdruck könnte auch isoliert am Ende 19 im Verteilerkanal 17 erzeugt werden. Zur Aufbereitung der Flüssigkeit sind selbstverständlich auch andere Einsätze bzw. das Fördern der Flüssigkeit zu einer Behandlungseinrichtung oberhalb der Erdoberfläche denkbar.

## Patentansprüche

1. Vorrichtung zur Beeinflussung von im Erdreich befindlicher Flüssigkeit mittels eines in das Erdreich eingebrachten Brunnenschachts mit teilweise flüssigkeitsdurchlässiger Wandung, der durch mindestens eine Trennwandung in mehrere, gegeneinander abgedichtete Schachtbereiche zur Erzeugung mindestens eines Flüssigkeitskreislaufs zwischen dem Brunnenschacht und dem ihm umgebenden Erdreich aufgeteilt ist, dadurch gekennzeichnet, daß die Wiedereinleitung der Flüssigkeit vom Brunnenschacht (10) in das umgebende Erdreich (16) über mindestens einen unter Unterdruck stehenden, mit Durchgangsöffnungen (18) versehenen und sich in das umgebende Erdreich (16) erstreckenden Verteilerkanal (17, 17') erfolgt.

2. Vorrichtung nach Anspruch 1, dadurch gekennzeichnet, daß sich der mindestens eine Verteilerkanal (17, 17') oberhalb des Flüssigkeitsspiegels (21) in das umgebende Erdreich (16) erstreckt.

3. Vorrichtung nach Anspruch 2, dadurch gekennzeichnet, daß im Brunnenschacht (10) eine Pumpe (15), deren Leistung in Abhängigkeit von der Bodenfeuchtigkeit steuerbar ist, angeordnet ist.

4. Vorrichtung nach einem der Ansprüche 1 bis 3, dadurch gekennzeichnet, daß der mindestens eine Verteilerkanal (17) als Rohr mit einem sich horizontal erstreckenden gelochten Abschnitt (17.1) ausgebildet ist.

5. Vorrichtung nach einem der Ansprüche 1 bis 4, dadurch gekennzeichnet, daß der mindestens eine Verteilerkanal (17) an beiden Enden (18, 19) mit dem Schacht (10) verbunden ist und daß im Schacht (10) oberhalb des Flüssigkeitsspiegels (21) ein Unterdruck herrscht.

6. Vorrichtung nach Anspruch 5, dadurch gekennzeichnet, daß im oberen Bereich des Schachtes (10.1) ein topfartiger Behandlungseinsatz (23) mit einer Düsenplatte (24) im Bodenbereich und einem bis unterhalb der Düsenplatte geführten Gaszufuhrkanal (25, 26), der durch den im Schacht (10) herrschenden Unterdruck Gas von außen bis unter die Düsenplatte (24) leitet und mit mehreren, oberhalb der Düsenplatte (24) angeordneten konzentrischen Leitringen (27, 28, 29) zur Führung der aus einem unteren Schachtbereich (10.2) angesaugten und über ein Durchgangsrohr (14) in den oberen Schachtbereich (10.1) in den topfartigen Einsatz (23) geleiteten Flüssigkeit angeordnet ist.

7. Vorrichtung nach Anspruch 6, dadurch gekennzeichnet, daß die Leitringe (27, 28, 29) teilweise auf der Düsenplatte (24) aufsitzen.

8. Vorrichtung nach einem der Ansprüche 1 bis 7, dadurch gekennzeichnet, daß eine zuführöffnung (32) zur Einleitung von Behandlungsstoffen in den oberen Schachtbereich (10.1) vorgesehen ist.

9. Vorrichtung nach einem der Ansprüche 6 bis 8, dadurch gekennzeichnet, daß der Behandlungseinsatz (23'), das Durchgangsrohr (14') und der mindestens eine Verteilerkanal (17') eine nachträglich in den oberen Bereich eines Brunnenschachtes (10') einsetzbare Baueinheit bilden.
